# EUROPEAN PATENT APPLICATION

(11) **EP 1 142 748 A2**
(43) Date of publication of application: **10.10.2001**
(21) Application number: 01103673.8
(22) Date of filing: 23.02.2001
(51) Int. Cl.: B60K 41/00

(54) **Power controller for a vehicle**

(30) Priority: 01.03.2000 JP 2000055370
(71) Applicant: Hitachi, Ltd., Chiyoda-ku, Tokyo 101-8010 (JP)
(72) Inventor: Amano, Masahiko, Hitachioota-shi, Ibaraki 313-0022 (JP); Masaki, Ryoso, Hitachi-shi, Ibaraki 319-1413 (JP); Morooka, Yasuo, Hitachi-shi, Ibaraki 316-0011 (JP)
(74) Representative: Beetz & Partner Patentanwälte

(57) **Abstract**

A power controller for a vehicle can operate electrical load upon stopping of engine or turning OFF of a key switch, and lowering of remaining capacity of a main battery (1) can be prevented. The control system has a control portion controlling operation of a power generator (3) and an electrical load mounted on an automotive vehicle. The control system also includes remaining capacity measuring means (21) for measuring a remaining capacity of a battery. The control portion drives a predetermined power load when an engine is stopped or a key switch is held OFF, and operation of the power load is stopped when a remaining capacity of the battery measured by the remaining capacity measuring means (21) becomes smaller than a predetermined value.

## Description

### BACKGROUND OF THE INVENTION

### Field of the Invention

The present invention relates generally to a power controller for a vehicle. More particularly, the invention relates to a control system for an automotive power source system suitable for controlling an automotive power source having higher voltage and higher capacity battery than the conventional 14V system, such as 42V system.

### Description of the Related Art

In the recent years, for adapting to increasing of electrically actuated on-vehicle equipments, such as electrically driven power steering, electrically actuated air conditioner and so forth, and increasing of capacity thereof. 42V automotive power source system, in which 42V system power source is added to the conventional 14 system power source, has been proposed. In the 42V system power source, since a voltage becomes three times higher than that of the 14V system, a current can be one third to reduce power loss and to save weight of a harness. Also, it is facilitated to adaptation for a large capacity load. Also, a capacity of the battery is larger than that of the conventional battery, and of nickel hydride battery, lithium ion battery and so forth can be applied in place of the conventional lead acid battery toward the future. conventional 14V system has to be maintained as is. Therefore, recently, a system having both of a main battery of 42V system and a auxiliary battery of 14v system and connecting both batteries through a DC/DC converter for controlling charging from the main battery to the auxiliary battery, has been proposed.

However, in the recently proposed system, the following problem can be encountered. Namely, utilizing large capacity of the battery of 42V system, it becomes possible to operate electrical load, such as electrically actuated air conditioner even while the engine is not driven. However, when a remaining capacity of the main battery becomes small, it becomes impossible to start-up the engine.

Also, for example, when the lamps are connected to the 14V system, it becomes necessary to turn the lamps ON even when the key switched is held OFF. However, when the battery capacity of the auxiliary battery is small, remaining capacity is instantly lowered to lower remaining capacity of the main battery when the lamps maintained ON.

### SUMMARY OF THE INVENTION

The first object of the present invention is to provide a control system for an automotive power source system which can operate electrical load upon stopping of engine or turning OFF of a key switch, and lowering of remaining capacity of a main battery can be prevented.

The second object of the present invention is to provide a control system for an automotive power source which can operate electrical load of low voltage system while a key switch is held OFF even when a capacity of a auxiliary battery is small.

In order to accomplish the above-mentioned objects, one aspect of the present invention, a control system for an automotive power source system having a control portion controlling operation of a power generator and an electrical load mounted on an automotive vehicle, comprises:
remaining capacity measuring means for measuring a remaining capacity of a battery,
the control portion driving a predetermined power load when an engine is stopped or a key switch is held OFF, and operation of the power load being stopped when a remaining capacity of the battery measured by the remaining capacity measuring means becomes smaller than a predetermined value.

With the construction set forth above, when the engine is stopped or the key switch is held OFF, operation of the power load is possible, and lowering of the remaining capacity of the main battery can be prevented.

Preferably, the control portion may set a plurality of threshold values of the remaining capacity corresponding preference of the power load to sequentially stop the power load having low preference in sequential order according to lowering of remaining capacity of the battery.

Preferably, the control portion may operate a predetermined power load when the engine is stopped or the key switch is held OFF to start up the engine when the remaining capacity of the battery is lowered below a predetermined value.

Preferably, the control system may comprise a switch for determining whether starting up of engine is permitted or not when the key switch is held OFF, the control portion may start up the engine only when the switch is ON, when the key switch is OFF.

Preferably, the control system may further comprise means for inputting a remaining amount information of fuel, the control portion may stop the engine when remaining amount of fuel becomes smaller than a predetermined value after starting up the engine.

Further preferably, the control port ion may stop operation of the power load when the remaining capacity of the battery becomes smaller than a predetermined value, and stops operation of the control system per se.

Preferably, the control portion may resume operation when the key switch is turned ON after once stopping the operation of the control portion per se.

According to another aspect of the present invention, a control system for an automotive power source system having a control portion controlling a power generator or power load mounted on an automotive vehicle, comprises:
remaining capacity measuring means for measuring a remaining capacity of a battery, a main battery, an auxiliary battery and a voltage converter for charging from the main battery to the auxiliary battery,
the control portion operating the voltage converter when engine is stopped or key switch is held OFF and stopping operation of the voltage converter when remaining capacity of the main battery is lowered below a predetermined value.

### BRIEF DESCRIPTION OF THE DRAWINGS

The present invention will be understood more fully from the detailed description given hereinafter and from the accompanying drawings of the preferred embodiment of the present invention, which, however, should not be taken to be limitative to the invention, but are for explanation and understanding only.

In the drawings:
Fig. 1 is a block diagram showing a construction of one embodiment of a control system for an automotive power source system according to the present invention;
Fig. 2 is a flowchart showing an operation of a main battery control portion to be employed in one embodiment of the control system for the automotive power source system according to the present invention;
Fig. 3 is a flowchart showing an operation of a auxiliary battery control portion to be employed in one embodiment of the control system for the automotive power source system according to the present invention; and
Fig. 4 is a block diagram showing a system construction showing another embodiment of a control system for an automotive power source system according to the present invention.

### DESCRIPTION OF THE PREFERRED EMBODIMENT

The present invention will be discussed hereinafter in detail in terms of the preferred embodiment of a control system for an automotive power source system according to the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structure are not shown in detail in order to avoid unnecessary obscurity of the present invention.

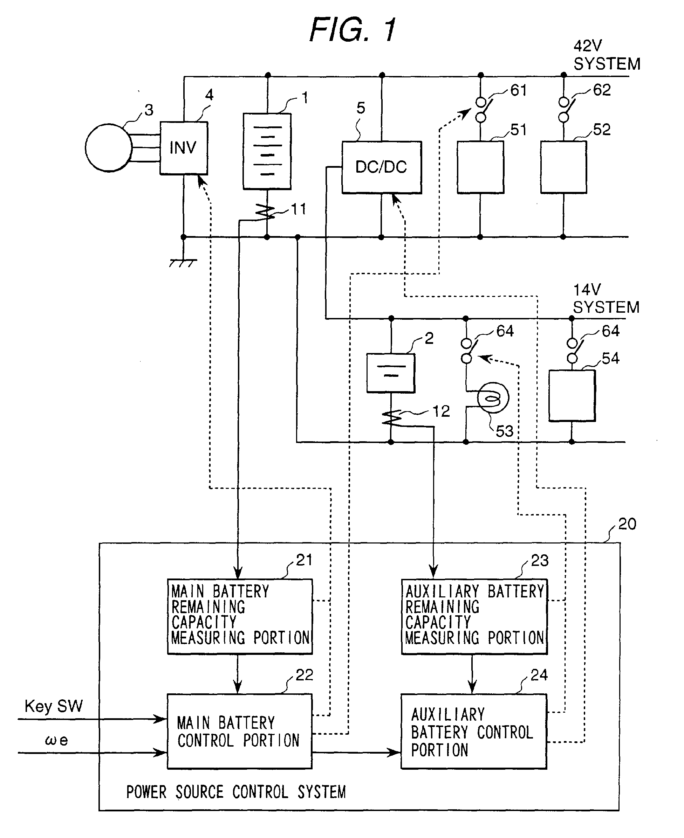

The construction and operation of one embodiment of a control system for an automotive power source system will be discussed hereinafter with reference to Figs. 1 to 3.

At first, a construction of the shown embodiment of the control system for the automotive power source system will be discussed with reference to Fig. 1.

Fig. 1 shows a system construction showing one embodiment of the control system for the automotive power source system according to the present invention.

The shown embodiment of the control system for the automotive power source system will be discussed in terms of an example, in which a main battery of 42V system and a auxiliary battery 2 of 14V system. A motor/generator 3 is connected to the main battery 1 via an inverter 4. The motor/generator 3 is operated upon starting up of the engine and thus serves as a starter, and is operated as a generator for supplying an electric power to a load when the engine is driven. The auxiliary battery 2 of 14V system is charged by the main battery 1 via a DC/DC converter 5.

To the 42V system and the 14V system, a large number of electrical loads 51, 52, 53 and 54 are connected. To the 42V system, an electrically actuated or motor driven air conditioner 51 or a high power load 52, such as an electrically actuated or motor driven power steering system are mainly connected. Loads to be connected to the 14V system includes lamp loads 53, such as a head lamp, parking lamp. For connecting the lamps 53 to the 42V system, filament has to be made thinner to be disadvantageous in view of duration. Therefore, it is typical to connect the lamps 53 to the 14V system. Load 54 for low voltage operation, such as a power source of the control system is also connected to the 14V system.

A power source control system 20 includes a main battery remaining capacity measuring portion 21, a auxiliary battery remaining capacity measuring portion 23, a main battery control portion 22 and a second battery control portion 24 and provides a command to the inverter 4 and the DC/DC converter 5 depending upon size of the electrical loads 51 to 54 and remaining capacities of the batteries 1 and 2. On the other hand, the power source control system 20 performs operation for preventing lowering of remaining capacities of the batteries 1 and 2 by shutting off switches 61, 62, 63 and 64 of the electrical loads, as required.

The main battery residual capacity measuring portion 21 measures a remaining capacity of the main battery on the basis of information of a current sensor 11. The auxiliary battery remaining capacity measuring portion 23 measured the remaining capacity of the auxiliary battery 2 on the basis of information of a current sensor 12. As measuring method of remaining capacity of the battery, the measurement is performed by integrating charge and discharge current flowing through the battery, for example. Other than the method set forth above, a method for performing measurement from a voltage and a current of the battery, a method for performing correction of the remaining capacity derived by the integrated value of the current by a voltage and current value. On the other hand, any suitable measuring method may be used adapting to kind of the battery (lead, nickel hydride, lithium ion and so forth).

The main battery control portion 22 controls charging and discharging of the main battery 1 using information of the remaining capacity measured by the main battery remaining capacity measuring portion 21 , key switch information KeySW and information of engine revolution speed ωe.

Here, discussion will be given for operation of the main battery control portion 22.

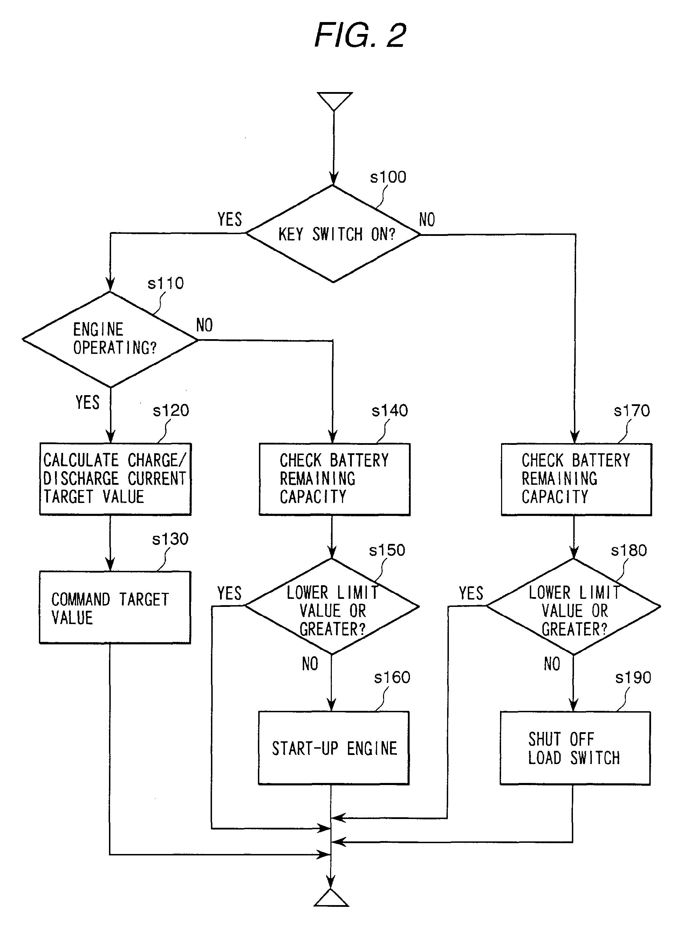

Fig. 2 is a flowchart showing operation of the main battery control portion to be used in one embodiment of the control system for the automotive power source system according to the present invention.

At step s100, the main battery control portion 22 makes judgment whether the key switch is ON or not on the basis of the key switch information KeySW. When the key switch is ON, the process is advanced to step s110, and when the key switch is OFF, the process is advanced to step s170.

When the key switch is ON, at step s110, the main battery control portion 22 makes judgment whether the engine is in operation or not. When the engine is in operation, the process is advanced to step s120, and when the engine is not in operation, the process is advanced to step s140.

When the key switch is ON and the engine is in operation, at step s120, the main battery control portion 22 calculates a target value of charging and discharging current of the battery depending upon remaining capacity of the battery measured by the main battery remaining capacity measuring portion 21. The target value of charging and discharging current is set depending upon error between the remaining capacity of the battery from a target remaining capacity. For example, assuming that remaining battery remaining capacity is 70% (taking fully charged condition as 100%), if the current remaining capacity is 60%, a charge current target value is derived by multiplying a difference of 10% by an appropriate coefficient.

Next, at step s130, the main battery control portion 22 provides the current target value calculated at step s120, to the inverter 4 as the command. Since a difference between the generation output of the motor/generator 3 and load power is charged to the battery, in the inverter 4, the generation output of the motor/generator 3 is controlled so that the battery current becomes the commanded current target value.

By this, when the key switch is ON and the engine is in operation, the main battery control portion 22 effects control so that the motor/generator 3 is operated as the generator by revolution of the engine for supplying electric power to the electrical load.

Next, when the key switch is ON and the engine is no in operation, at step s140, the main battery control portion 22 checks if the remaining capacity of the main battery 1 as measured by the main battery remaining capacity measuring portion 21 is not lowered below a predetermined lower limit from time to time. As the lower limit of the remaining capacity, a value capable of outputting electric power necessary for starting up the engine. For example, the lower limit is preliminarily determined at 30% of full charge. The characteristics is different depending upon the kind of the battery and output characteristics is variable depending upon the temperature. The lower limit is set in consideration of this.

At step s150, the main battery control portion 22 makes judgment whether the remaining capacity is greater than the lower limit value or not. If the remaining capacity is greater than the lower limit value, the process directly goes end. If the remaining capacity is smaller than the lower limit value, the process is advanced to step s160.

When the remaining capacity becomes smaller than the lower limit value, the main battery control portion 22 provides a command for starting up the engine for the inverter 4 at step s160. When the engine is started up, since the motor/generator 3 is operated as generator, the remaining capacity of the main battery 1 will not be lowered any further.

For example, in case of the vehicle having an idle stop function, when the vehicle stops at the traffic signal, the engine is stopped automatically. When the electrically actuated air conditioner 51 is kept in operation even while the engine operation is interrupted, the remaining capacity of the main battery 1 is possibly lowered below the predetermined lower limit value to cause difficulty in re-starting of the engine. Even in such idle stop function is provided, lowering of the remaining capacity of the main battery can be prevented by starting up the engine through steps s140 to s160 to enable re-starting of the engine.

While the engine operation is interrupted by the idle stop function in the foregoing example, similar is true even in the case when the vehicle is stopped at a motor tool in boarded condition. In case of the electrically actuated air condition, it can be operated at stopping of the vehicle without starting up the engine. At this time, lowering of the remaining capacity of the main battery can be prevented.

On the other hand, upon starting up of the engine, it is required to control to check items to be normally checked upon starting up of the engine, such as whether a shift lever is put in P (parking) range or N (neutral) range. On the other hand, in consideration of subsequent travel, control is made to check whether fuel is remained in an amount greater than or equal to predetermined extent. When the engine cannot be started up in some reason, a process is advanced to step s190 to shut off the electrical load.

On the other hand, after starting up the engine at step s160, it is possible to consume out the fuel if the engine is operated for a long period. Therefore, remaining amount of fuel is checked to stop the engine when the remaining amount of the fuel becomes less than or equal to a certain value.

Next, discussion will be given for the case where the key switch is held off. Similar is true when the key is not inserted in a key cylinder. When the key switching is turned OFF, many power loads are switched off simultaneously. However, predetermined some electrical loads, such as the electrically actuated air conditioner 51 and so forth may be set to enable operation even while the key switch is held off.

Therefore, at step s170, the main battery control portion 22 checks whether the remaining capacity of the main battery 1 as measured by the main battery remaining capacity measuring portion 21 is lowered below the predetermined lower limit value from time to time. As the lower limit value of the remaining capacity, a value capable of outputting necessary power for starting up the engine, such as 30% of full charge condition, is preliminarily set. Characteristics is different depending upon the kind of the battery, and also the output characteristics can also be varied depending upon temperature. Therefore, the lower limit value is set in consideration with those characteristics.

Then, at step s180, the main battery control portion 22 makes judgment whether the remaining capacity is greater than the lower limit value or not. If the remaining capacity is greater than the lower limit value and the remaining capacity, the process directly goes end. On the other hand, if the remaining capacity is smaller than the lower limit value, the process is advanced to step s190.

When the remaining capacity becomes smaller than the lower limit value, the main battery control portion 22 shut off a switch 61 of the electrical load in operation at step s190. By this, lowering of the remaining capacity of the main battery 1 can be prevented.

When the engine may be automatically started out while the key switch is held OFF, it may be possible to advance the process to step s160 to provide the command for starting up the engine. In case of parking in garage having high sealing ability, starting up of the engine is not desirable. Therefore, by providing a button for permitting starting up of the engine while key switch is off, it may be possible to advance the process to step s160 for automatically start up the engine when the button is turned ON.

As set forth above, with the shown embodiment, even when the engine is not driven, the electrical load, such as the electrically actuated air conditioner can be actuated. Furthermore, since remaining capacity of the battery is constantly monitored, it can be prevented to lower the remaining capacity of the battery to be incapable of starting up of the engine. It should be noted that while discussion has been given in terms of the electrically actuated air condition as the electrical load, similar is true for the electrical load, such as power window, defroster and so forth.

On the other hand, the shown embodiment is effective even in the case where the air conditioner or so forth is automatically actuated by a timer. In winter or summer, it may be desired to actuate the air conditioner in advance of starting driving of the vehicle. Bt preliminarily setting starting up time of the air condition by the timer, the vehicular cabin may be air conditioned at comfortable temperature upon starting driving. When the capacity of the main battery is sufficiently large, it is possible to actuate the electrically actuated air conditioner without starting up the engine. On the other hand, if the remaining capacity of the battery is dropped below a minimum value, operation of the air condition is stopped or engine is stared up automatically. Therefore, lowering of the remaining capacity of the battery can be prevented. As the electrical load effective of starting by timer before starting driving, defroster, catalytic converter heating device and so forth may be considered in addition to the electrically actuated air conditioner.

It should be noted that, at step s190, at the same time of shutting of the switch 61 of the electrical load, the power source of the power source control system 20 per se may also be shut off. When the condition at step s190 is established, it becomes unnecessary to monitor the remaining capacity of the battery until the engine is started upon in response to turning ON of the key switch. Since the power source control system 20 consumes electrical power while a little, wasteful power consumption can be avoiding by interrupting operation of the power source control system 20. Particularly, when the vehicle is left in operative for a long period, shutting of the power source for the power source control system may be effective. The power source for the control system 20 which is once shut off is resumed when the key switch is turned ON.

On the other hand, at step s190, upon shutting off the load, the threshold value of the remaining capacity of the battery may be provided in plural depending upon preference of the electrical load. For example, concerning the air conditioner, it can be shut off when the remaining capacity becomes lower than or equal to 30%. Concerning lamp load (14V system), for high importance in security, it is set to operate until the remaining capacity is lowered less than or equal to 20%. By this, it becomes possible to operate the load having higher preferential order for longer period.

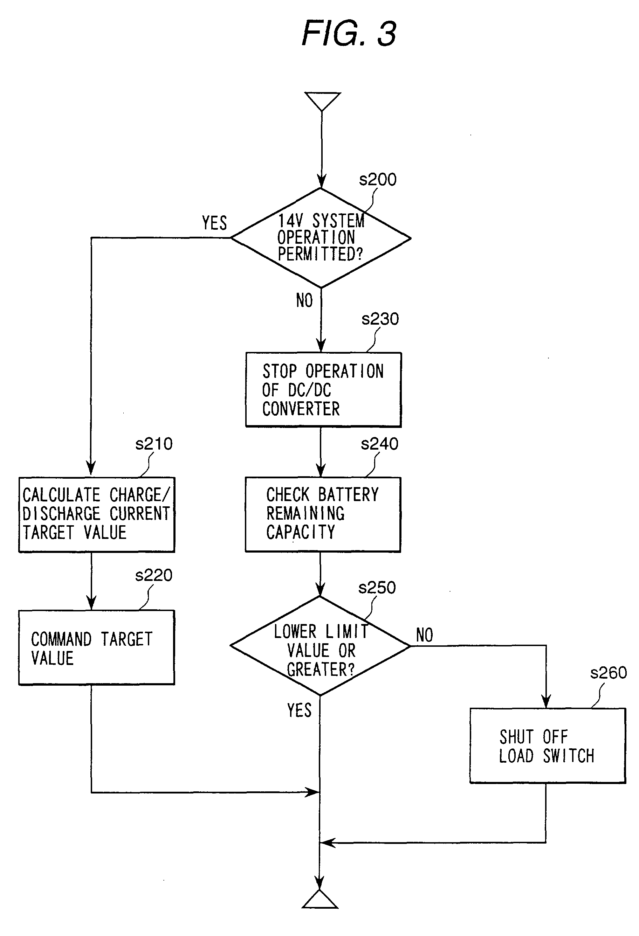

Next, discussion will be given for operation of the auxiliary battery control portion 24 with reference to Fig. 3.

Fig. 3 is a flowchart showing operation of the auxiliary battery control portion to be employed in one embodiment of the control system for the automotive power source system according to the present invention.

At step 200, the auxiliary battery control portion 24 makes judgment whether the load for the 14V system can be operated or not. Since the main battery control portion 22 provides a command whether the load for 14V system can be operated or not, to the auxiliary battery control portion 24, the auxiliary battery control portion 24 makes judgment on the basis of the command from the main battery portion 22. As viewed from the main battery side, overall 14V including the DC/DC converter 5 can be regarded as one electrical load. It can be considered as one of the electrical load which can be operated even upon stopping of the engine or turning OFF of the key switch similarly to the electrically actuated air conditioner 51. Accordingly, when step s190 of Fig. 2 is reached, the main battery control portion 22 issues a command for disabling operation of the 14V system, and otherwise, enabling operation of the 14V system, to the auxiliary battery control portion 24.

When the operation of the 14V system is enabled, at step s210, the auxiliary battery control portion 24 calculates a target value of charge and discharge current of the auxiliary battery 2 on the basis of information of the remaining capacity of the auxiliary battery measured by the auxiliary battery remaining capacity measuring portion 23.

Next, at step s220, the auxiliary battery control portion 24 provides the target value of the DC/DC converter 5. The target value of charge and discharge current is zero in steady state to supply only load current of the 14V system by the DC/DC converter 5. When the load power in excess of the maximum output of the DC/DC converter 5 is transitionally generated, the remaining capacity of the auxiliary battery 2 is reduced. The reduced capacity is compensated by charging when the load becomes lighter.

When the remaining capacity of the main battery 1 is lowered to make operation of the 14V system impossible, the auxiliary battery control portion 24 stops the operation of the DC/DC converter 5. By this, power supply to the 14V system from the main battery 1 is stopped to prevent lowering of the remaining capacity of the main battery 1.

Next, at step 240, the auxiliary battery control portion 24 checks whether the remaining capacity of the auxiliary battery 2 measured by the auxiliary battery remaining capacity measuring portion 23 is greater than or equal to a predetermined lower limit value. Even when the operation of the DC/DC converter 5 is stopped, the capacity of the auxiliary battery is remained, load of the 14V system, such as the lam load 53 can be operated.

Then, at step s250, the auxiliary battery control portion 24 makes judgment whether the remaining capacity is greater than or equal to the lower limit value or not. If the remaining capacity is greater than the lower limit value, the process directly goes end. If the remaining capacity is smaller than the lower limit value, the process is advanced to step s260.

When the remaining capacity of the auxiliary battery 2 is dropped below the lower limit value, the auxiliary battery control portion 24 shut off the switch 63 of the electrical load of the 14V system, at step s260. By this, lowering of the remaining capacity of the auxiliary battery 2 can be prevented.

Concerning the auxiliary battery, it does not influence for starting up of the engine even when the remaining capacity becomes zero. Therefore, it is possible to skip the processes of steps s240 and s260. Depending upon kind of the battery, if making zero of the remaining capacity may influence for duration of the battery, lower limit value of the remaining capacity may be set for checking from time to time.

In the method set forth above, when the lamp load 53 connected to the 14V system or so forth is kept ON upon turning OFF of the key switch, the DC/DC converter 5 keeps operation until the remaining capacity of the main battery 1 is lowered to the lower limit value for supplying power to the load, and subsequently, the power is supplied to the load from the auxiliary battery 2 until the remaining capacity of the auxiliary battery 2 is lowered to the lower limit value.

In the foregoing discussion, while the auxiliary battery remaining capacity measuring portion 23 is provided, if it is not necessary to manage the remaining capacity, a method to control only by the voltage of the battery may also be used. In such case, the voltage of the 14V system is detected by a voltage sensor, the DC/DC converter 5 may be controlled so that the voltage becomes the target value.

On the other hand, the foregoing discussion has been given in terms of 42V system of the main battery and 14V system of the auxiliary battery, the present invention is effectively applicable at any value of voltage. Even when the voltage of the main battery is as high as 200 to 300V as that for the hybrid drive type vehicle, the present invention is applicable.

As set forth above, according to the shown embodiment of the present invention, the electrical load, such as the electrically actuated air conditioner, lamps and so forth may be operated even when the engine operation is interrupted or key switch is held OFF with preventing lowering of the remaining capacity of the main battery.

On the other hand, by making the capacity of the auxiliary battery smaller, system cost can be reduced.

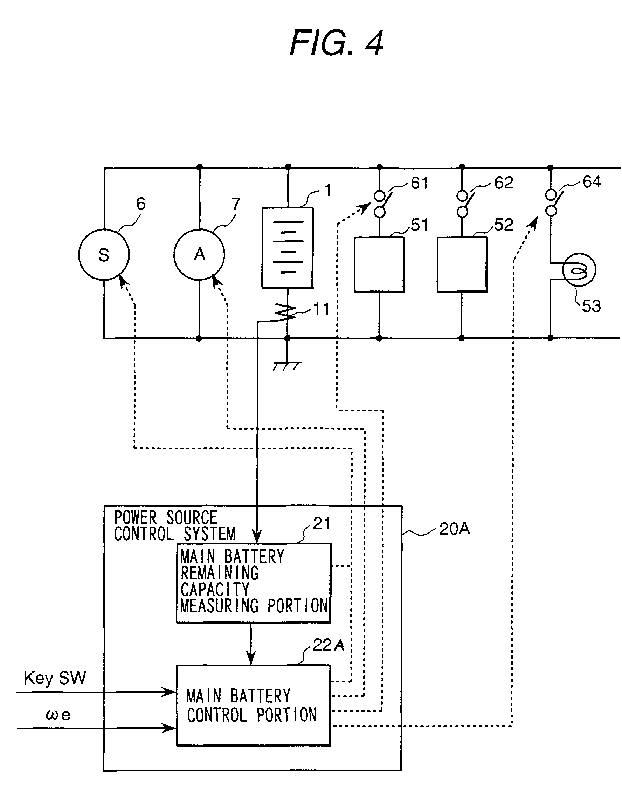

Next, construction and operation of another embodiment of the control system for the automotive power source system according to the present invention will be discussed with reference to Fig. 4.

Fig. 4 is an illustration showing a system construction showing the construction of another embodiment of the control system for the automotive power source system according to the present invention. It should be noted that like reference numerals to those in Fig. 1 identifies like components, and detailed discussion for such common components will be omitted for avoiding redundant disclosure and whereby to keep the disclosure simple enough to facilitate clear understanding of the invention.

In the shown embodiment, in place of the motor/generator 3 shown in Fig. 3, a typical starter 6 and an alternator 7 are employed. The battery is only main battery 1 of 14V system. Accordingly, the power source control system 20A has a main battery remaining capacity measuring portion 21 and a main battery control portion 22A.

Operation of the main battery control portion 22A is basically similar to the flowchart shown in Fig. 2.

However, at step s130, the main battery control portion 22A provides a current target value calculated at step s120 to the alternator 7 as a command. By adjusting a field voltage of the alternator 7, generated power is adjusted to control toward the target value. A difference between the generation output of the alternator 7 and the load power is charged to the battery.

On the other hand, when the remaining capacity is lowered below the lower limit value, the main battery control portion 22A provides a command for starting up the engine for the starter at step s160. Once the engine is started up, power is generated by the alternator 7. Therefore, the remaining capacity of the main battery 1 is not lowered any further.

As set forth above, by the shown embodiment, not only for the 42V power source system having the motor/generator, but only the system constituted of the starter and alternator, or the power source system having only main battery of 14V system, the electrical load, such as the electrically actuated air condition, lamps and so forth can be operated even while the engine is stopped and the key switch is held OFF with preventing lowering of the remaining capacity of the main battery.

According to the present invention, the electrically actuated air condition, lamps and so forth can be operated even while the engine is stopped and the key switch is held OFF with preventing lowering of the remaining capacity of the main battery.

On the other hand, in the automotive power source system having the main battery and the auxiliary battery, it becomes possible to operate the power of the low voltage system while the key switch is OFF even when the capacity of the auxiliary battery is small.

Although the present invention has been illustrated and described with respect to exemplary embodiment thereof, it should be understood by those skilled in the art that the foregoing and various other changes, omission and additions may be made therein and thereto, without departing from the spirit and scope of the present invention. Therefore, the present invention should not be understood as limited to the specific embodiment set out above but to include all possible embodiments which can be embodied within a scope encompassed and equivalent thereof with respect to the feature set out in the appended claims.

## Claims

1. A control system for an automotive power source system having a control portion controlling operation of a power generator (3) and an electrical load mounted on an automotive vehicle, comprising:
remaining capacity measuring means (21) for measuring a remaining capacity of a battery (1),
said control portion driving a predetermined power load when an engine is stopped or a key switch is held OFF, and operation of said power load being stopped when a remaining capacity of the battery (1) measured by said remaining capacity measuring means (21) becomes smaller than a predetermined value.

2. A control system for an automotive power source system as set forth in claim 1, wherein said control portion sets a plurality of threshold values of the remaining capacity corresponding preference of said power load to sequentially stop the power load having low preference in sequential order according to lowering of remaining capacity of the battery (1).

3. A control system for an automotive power source system as set forth in claim 1, wherein said control portion operates a predetermined power load when the engine is stopped or the key switch is held OFF to start up the engine when the remaining capacity of the battery (1) is lowered below a predetermined value.

4. A control system for an automotive power source system as set forth in claim 3, which comprises a switch for determining whether starting up of engine is permitted or not when the key switch is held OFF, said control portion starts up the engine only when said switch is ON, when said key switch is OFF.

5. A control system for an automotive power source system as set forth in claim 3, which further comprises means for inputting a remaining amount information of fuel,
said control portion stops the engine when remaining amount of fuel becomes smaller than a predetermined value after starting up the engine.

6. A control system for an automotive power source system as set forth in claim 1, wherein said control portion stops operation of said power load when the remaining capacity of the battery (1) becomes smaller than a predetermined value, and stops operation of said control system per se.

7. A control system for an automotive power source system as set forth in claim 6, wherein said control portion resumes operation when the key switch is turned ON after once stopping the operation of the control portion per se.

8. A control system for an automotive power source system having a control portion controlling a power generator (3) or power load mounted on an automotive vehicle, comprising:
remaining capacity measuring means (21) for measuring a remaining capacity of a battery, a main battery (1), an auxiliary battery (2) and a voltage converter (5) for charging from the main battery (1) to the auxiliary battery (2),
said control portion operating said voltage converter (5) when engine is stopped or key switch is held OFF and stopping operation of said voltage converter (5) when remaining capacity of the main battery (1) is lowered below a predetermined value.
